Europäisches Patentamt

European Patent Office

Office européen des brevets

(19)

(11) Veröffentlichungsnummer: **0 324 926 B1**

# (12) EUROPÄISCHE PATENTSCHRIFT

(45) Veröffentlichungstag der Patentschrift: **15.07.92**

(21) Anmeldenummer: **88119757.8**

(22) Anmeldetag: **26.11.88**

(51) Int. Cl.⁵: **B60R  1/06**

(54) **Klappbarer Aussenspiegel für ein Fahrzeug.**

(30) Priorität: **18.12.87 DE 8716720 U**
**15.11.88 DE 8814288 U**

(43) Veröffentlichungstag der Anmeldung:
**26.07.89 Patentblatt  89/30**

(45) Bekanntmachung des Hinweises auf die
Patenterteilung:
**15.07.92 Patentblatt  92/29**

(84) Benannte Vertragsstaaten:
**AT BE CH DE ES FR GB IT LI LU NL SE**

(56) Entgegenhaltungen:
**DE-U- 7 922 313**
**DE-U- 8 000 783**
**DE-U- 8 711 959**

(73) Patentinhaber: **HOHE KG**
**Hauptstrasse 36**
**W-6981 Collenberg(DE)**

(72) Erfinder: **Seitz, Edwin**
**Hauptstrasse 74**
**W-6985 Neuenbuch(DE)**

(74) Vertreter: **Zinngrebe, Horst, Dr.rer.nat.**
**Saalbaustrasse 11**
**W-6100 Darmstadt(DE)**

Rank Xerox (UK) Business Services

## Beschreibung

Die Erfindung betrifft einen Außenspiegel für ein Fahrzeug mit einem Spiegelfuß und einem relativ zum Spiegelfuß aus einer Gebrauchslage nach vorne und hinten abklappbaren Spiegelghäuse, welches mittels einer Schwinge am Spiegelfuß gehalten ist, wobei die Schwinge an einem Ende am Spiegelfuß und am anderen Ende am Spiegelgehäuse angelenkt ist (siehe z.B. DE-U-80 00 783 und DE-A-24 36 339).

Das Spiegelgehäuse wurde bislang mit einer kräftigen Zugfeder am Spiegelfuß in der Gebrauchslage gehalten, deren Enden entweder direkt oder durch geeignete Befestigungsmittel einerseits im Inneren des Spiegelgehäuses und andererseits an einer in Gebrauchslage verdeckten Halteplatte des Spiegelfusses verankert sind. Um einen wakkelfreien Sitz des Spiegelgehäuses am Spiegelfuß während der Fahrt zu gewährleisten, muß die Zugfeder eine relativ starke Zugkraft entwickeln.

Dies hat den Nachteil, daß das abgeklappte Spiegelgehäuse unter der Wirkung der Zugfeder mit Schwung in die Gebrauchslage zurückklappt, so daß eine Verletzungsgefahr durch Einklemmen der Finger zwischen dem kräftig ausgebildeten Spiegelgehäuserand und dem Spiegelfuß bei zurückklappendem Spiegelgehäuse besteht. Diese Gefahrt ist vor allem dann beachtlich, wenn das Spiegelgehäuse aus einer definierten Klappendlage von Hand gelöst werden muß, etwa durch Wegdrücken eines Hebels (DE-A-32 20 893) oder durch Anstoßen des Gehäuses (DE-U-80 00 783).

Wird das Spiegelgehäuse in Gebrauchslage statt durch Zugfeder durch Eingriff von Rastelementen in Rasten gehalten, die am Spiegelgehäuse bzw. am Spiegelfuß ausgebildet sind (DE-A-24 36 339), schwingt das Spiegelgehäuse, wenn die Rastelemente durch Schlag auf das Spiegelgehäuse von vorne oder hinten aus ihren zugehörigen Rasten gelöst sind, unkontrolliert nach hinten oder vorne nach Art einer Peitsche zwischen der Gebrauchslage und einer nicht genau definierten Klappendlage. Dies ist vor allem dann nachteilig, wenn Fahrzeuge auf engem Raum nebeneinander geparkt werden müssen.

Der Erfindung liegt daher die Aufgabe zugrunde, bei dem eingangs genannten Außenspiegel die Verletzungsgefahr im wesentlichen auszuschließen und ein unkontrolliertes Schwingen des abgeklappten Spiegelgehäuses zu beseitigen.

Dazu ist bei dem genannten Außenspiegel vorgesehen, daß wenigstens eine Spreizfeder, deren Enden an einem spiegelgehäusefesten Teil und an einem spiegelfußfesten Teil angreifen, das Spiegelgehäuse in eine durch einen Anschlag definierte Klappendlage beaufschlagt. Die Erfindung vehindert das unerwünschte, unkontrollierte Schwingen des Spiegelgehäuses, wenn es aus der Gebrauchslage wenigstens in eine Richtung, vorzugsweise entgegen der Fahrtrichtung ausklappt, und schließt das Einklemmen von Fingern wenigstens insoweit aus, weil das Spiegelgehäuse nur gegen die Kraftwirkung der Spreizfeder in die Gebrauchslage zurückgeführt werden kann.

In bevorzugter Ausgestaltung der Erfindung sitzt die Spreizfeder an der hinteren Klappachse des Spiegelgehäuses, an der auch ein Ende der Schwinge angelenkt ist. Zur Sicherung des Spiegelgehäuses in der Gebrauchslage kann zweckmäßig vorgesehen sein, daß wenigstens ein Rastelement in einer Raste eingefangen ist, wobei als Raste bevorzugt zwei parallele, beabstandete Federstäbe dienen, die zweckmäßig am Spiegelfuß befestigt sind. Das Rastelement kann durch einen Arm realisiert sein, der ein verdicktes und hinterschnittenes, zweckmäßig gabelförmiges Ende aufweist.

In einer anderen Ausführungsform der Erfindung ist das Spiegelgehäue in Gebrauchslage durch eine im Spiegelgehäuse verankerte Zugfeder gehalten, welche ein an der Schwinge beweglich geführtes Rastelement gegen eine spiegelfußfeste Kulisse beaufschlagt, an der eine Falle sowie eine die hintere Klappendlage des Spiegelgehäuses definierende Vertiefung und zwischen der Falle und der Vertiefung eine zur Vertiefung leicht abfallende Schwelle ausgebildet sind. Bei dieser Ausführungsform wird die Wirkung der das Spiegelgehäuse in die Klappendlage drängenden Spreizfeder durch eine richtungs- und größenmäßige Umsetzung der von der Zugfeder entwickelten Kraft erreicht. Obwohl beim Abklappen des Spiegelgehäuses aus der Gebrauchslage nach vorne die volle Rückstellkraft der Zugfeder zum Tragen kommt und das Spiegelgehäuse selbsttätig in seine Gebrauchslage zurückführt, ist das Verletzungsrisiko hierbei dennoch gering, weil angesichts der leichten Überführbarkeit des Spiegelgehäuses in die hintere Klappendlage kein Anlaß mehr besteht, das Spiegelgehäuse etwa willentlich von Hand nach vorne abzuklappen.

In zweckmäßiger Weiterbildung der letztgenannten Ausführungsform der Erfindung ist das spiegelfußseitige Ende der Zugfeder am vorderen Arm eines zweiseitigen, an der Schwinge angelenkten Hebels verankert, dessen anderer Arm gegen das Rastelement anliegt. Diese Ausführungsform ermöglicht eine besonders einfache und durch zweckmäßige Gestaltung der beiden Hebelarme günstige Umsetzung der von der Zugfeder entwikkelten Zugkraft in eine Andruckkraft des Rastelements gegen die Kulisse.

Da die Kulisse in der Nähe der Anlenkung der Schwinge am Spiegelfuß vorgesehen ist, ist nach einer Weiterbildung der Erfindung die Kulisse zwischen der Falle und der Vertiefung kreisbogenförmig mit einem Krümmungsmittelpunkt gestaltet, der relativ zur hinteren Klappachse des Spiegelgehäuses nach vorne versetzt ist. Damit ergibt sich für das zweckmäßig bolzenförmige Rastelement nach Überschreiten der Schwelle und damit Verlassen der Gebrauchslage des Spiegelgehäuses eine von der vorderen Klappachse wegführende Form der Kulisse, welche besonders einfach das Einnehmen der hinteren Klappendlage durch das Spiegelgehäuse unter der Wirkung der Zugfeder ermöglicht.

Wenn in besonders vorteilhafter Weiterbildung der Erfindung die vordere Klappachse im Inneren des Spiegelgehäuses liegt und für den spiegelfußseitigen Randwulst des Spiegelgehäuses ein vorderer Anschlag am Spiegelfuß vorgesehen ist, wird zweierlei erreicht. Zum einen ist der Randwulst in der Klappendlage vom Spiegelfuß abgehoben, so daß die Spiegelgehäuselackierung nicht verkratzt wird. Zum anderen wird die Zugfeder etwas gespannt, so daß deren das Spiegelgehäuse in die Klappendlage drückende Vortriebskraft vergrößert ist.

Weitere zweckmäßige und besonders vorteilhafte Ausgestaltungen des Erfindungsgedanken sind in den Unteransprüchen angegeben.

Die Erfindung wird nachstehend anhand der in der beigefügten Zeichnung dargestellten Ausführungsbeispiele im einzelnen beschrieben. Es zeigen:

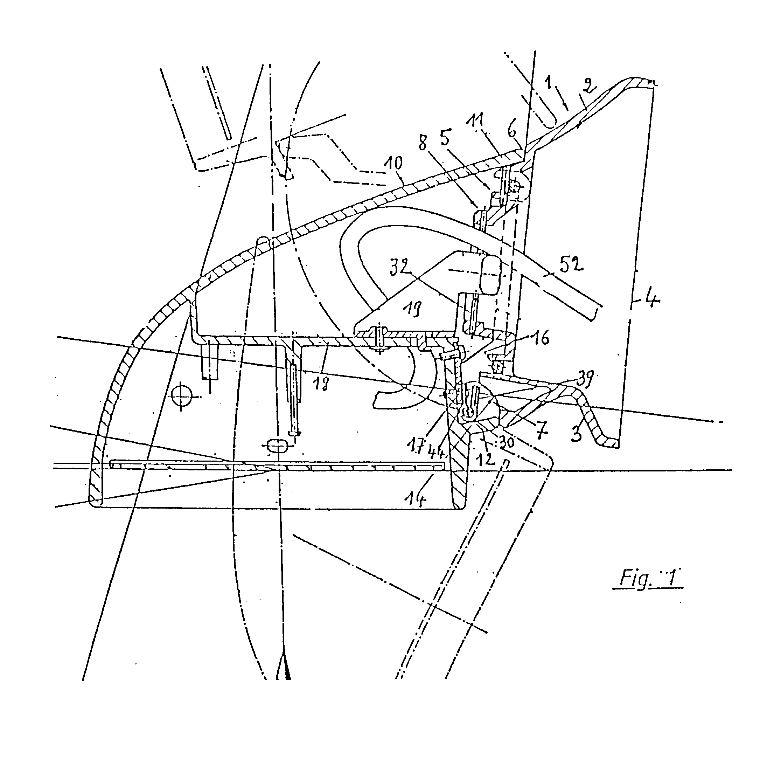

Fig. 1:    die Draufsicht auf einen bei an ein Fahrzeug anmontiertem Außenspiegel im wesentlichen horizontalen Querschnitt durch Spiegelfuß und in Gebrauchslage befindliches Spiegelgehäuse der ersten Ausführungsform;

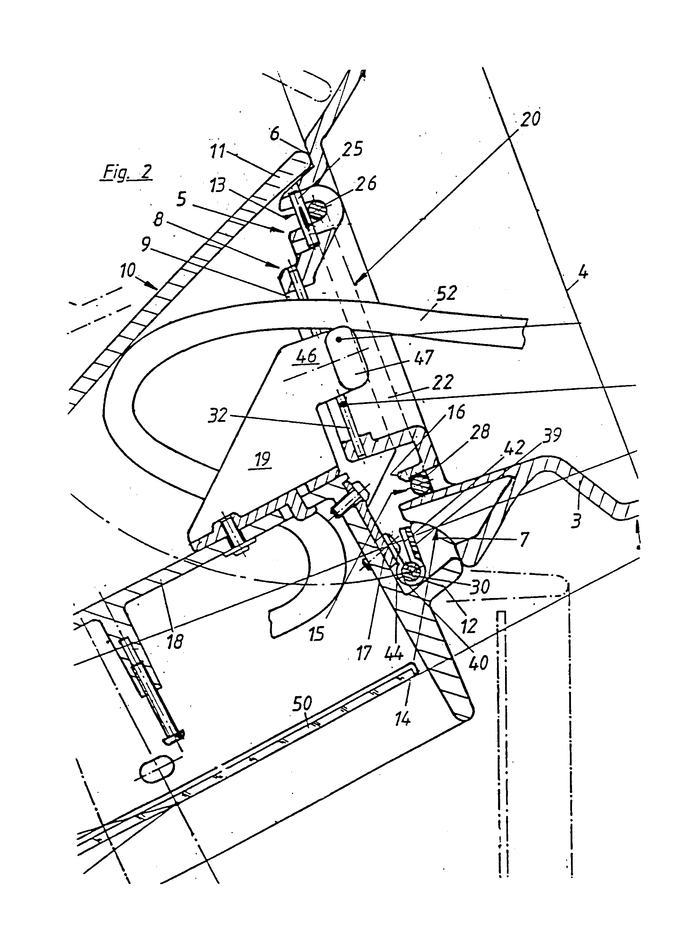

Fig. 2:    eine Draufsicht gemäß Fig. 1 auf einen vergrößerten Ausschnitt des Querschnittes;

Fig. 3:    eine Ansicht des Spiegelfusses mit Schwinge nach Abnahme des Spiegelgehäuses der ersten Audführungsform, und

Fig. 4:    eine Ansicht der in Gebrauchslage dem Spiegelfuß zugewandten Öffnung des Spiegelgehäuses der ersten Ausführungsform;

Fig. 5:    eine Draufsicht von oben auf einen Außenspiegel der zweiten Ausführungsform, wobei der Spiegelfuß und der spiegelfußnahe Teil des Spiegelgehäuses geschnitten dargestellt sind und das Spiegelgehäuse sich in Gebrauchslage befindet;

Fig. 6:    eine der Fig. 5 ähnliche Darstellung, bei der das Spiegelgehäuse in der hinteren Klappendlage dargestellt ist;

Fig. 7:    eine Ausschnittsdarstellung in vergrößertem Maßstab eines Teils des Spiegelfusses der zweiten Ausführungsform;

Fig. 8.:    eine der Fig. 5 entsprechende Darstellung mit einem nach vorne abgeklappten Spiegelgehäuse; und

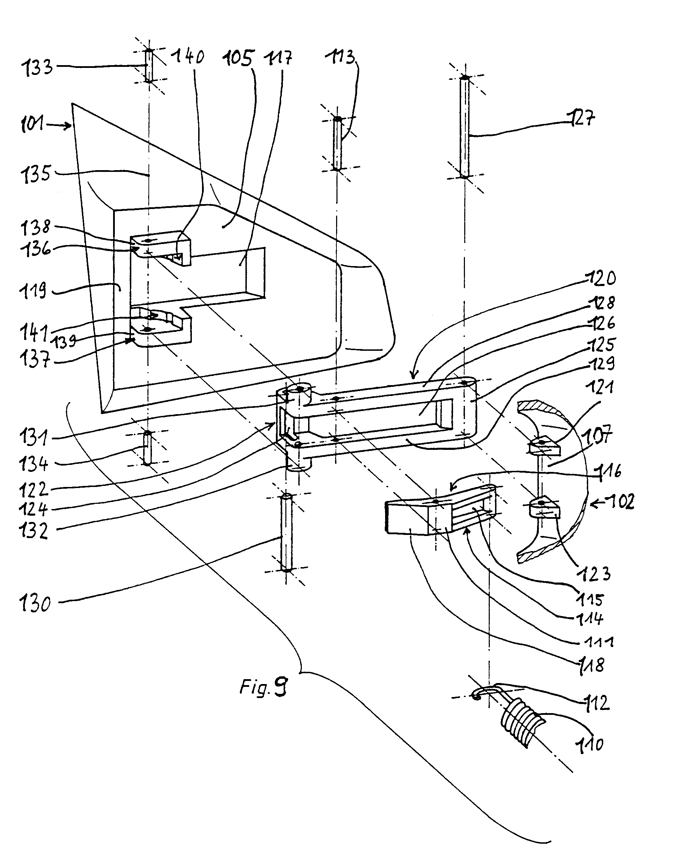

Fig. 9:    eine Explosionsdarstellung zur Erläuterung der Befestigungsart der Schwinge und der zugehörigen Bauteile aus dem Außenspiegel nach Fig. 5.

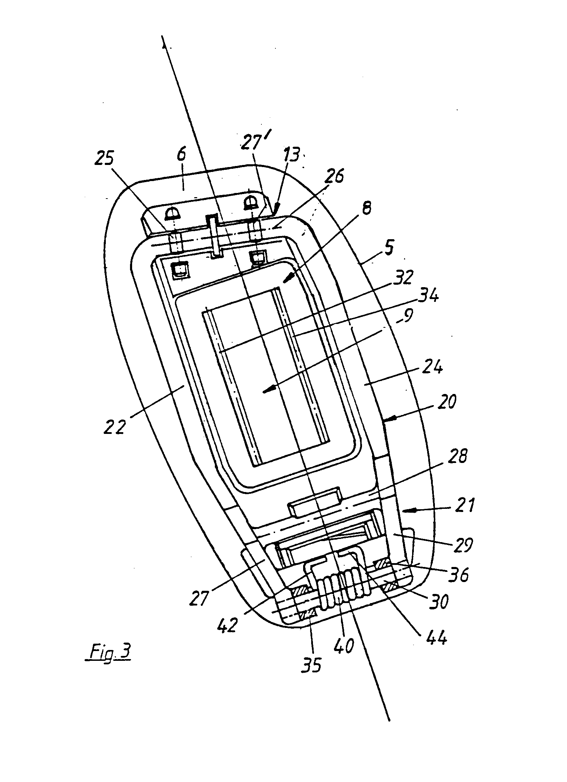

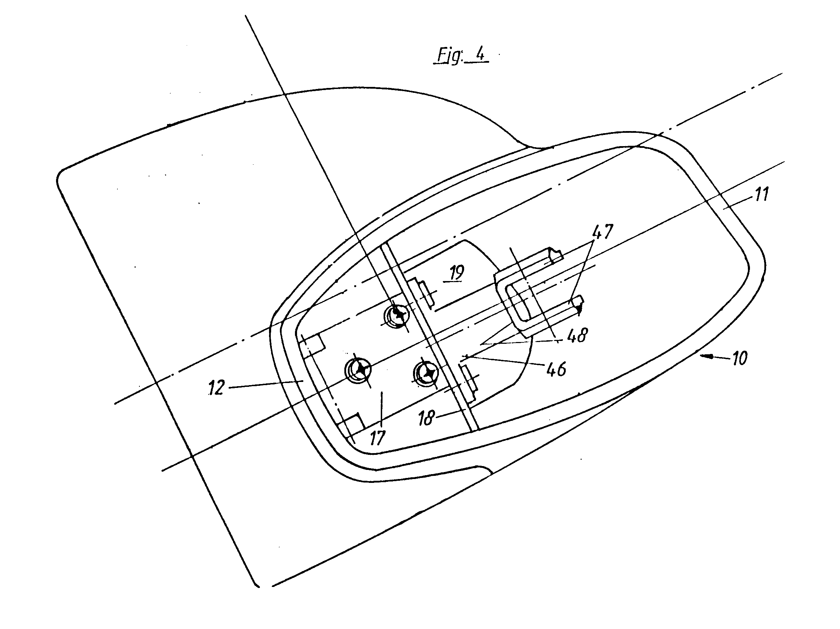

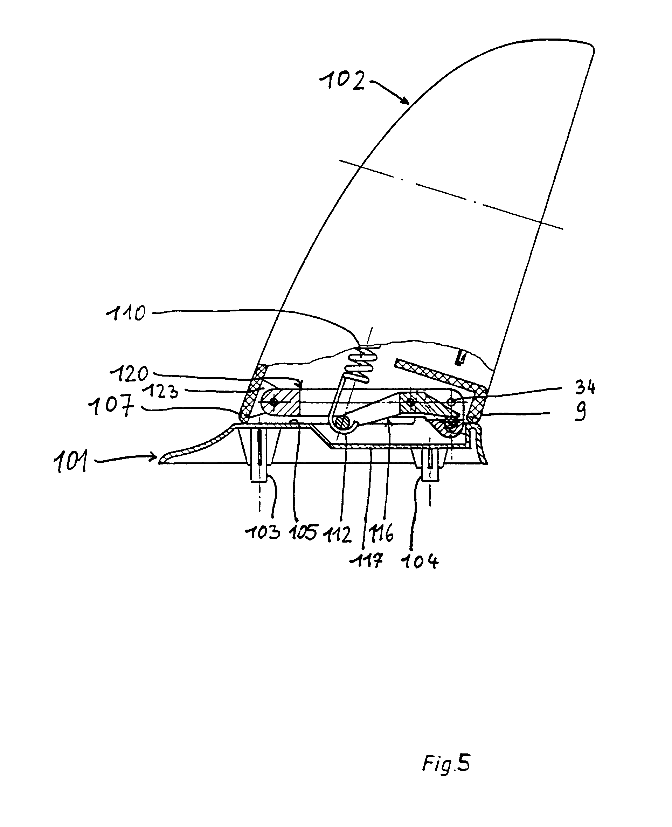

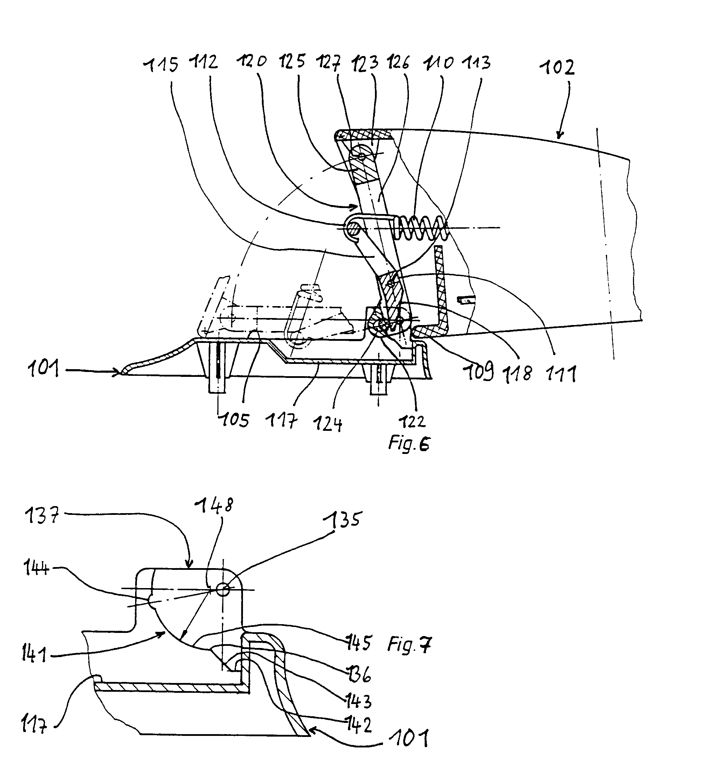

Im Folgenden wird zunächst die erste Ausführungsform des erfindungsgemäßen Spiegels beschrieben. Der hohle Spiegelfuß 1 mit erhabenem Profil 2, 3 besitzt nicht dargestellte Mittel, die seine Montage an der linken Fahrertür, etwa in deren Fensterdreieck, erlauben, wobei der Rand 4 mit der Fahrzeugkarosserie abschließt. Auf der dem Rand 4 abgekehrten Seite besitzt der Spiegelfuß 1 eine profilierte, sich im wesentlichen parallel zum Rand 4 erstreckende Halteplatte 5, deren Umriß in Figur 3 angegeben ist. Zunächst ist ein einspringender Randabsatz 6 zu erwähnen, in welcher der vordere (in Fahrtrichtung gesehen) Randwulst 11 des Spiegelgehäuses 10 in dessen Gebrauchslage ruht. Der hintere Randwulst 12 des Spiegelgehäuses 10 steht dann auf einer Randfläche 7 des Spiegelfußes 1.

Die Halteplatte 5 besitzt einen mittleren erhabenen Abschnitt 8, welcher von einer Schwinge 20 in Gebrauchslage umgeben ist. Der Abschnitt 8 weist eine mittlere, etwa rechteckige Öffnung 9 in das Innere des Spiegelfußes 1 auf, welche von zwei parallelen, beabstandeten Federstäben 32, 34 überbrückt ist.
Die gegenüberliegenden Enden jedes Federstabes 32, 34 sind in den gegenüberliegenden Begrenzungsteilen der Öffnung 9 fest verankert, sodaß jeder Federstab 32, 34 quer zu seiner Länge elastisch auslenkbar ist.

Zwischen dem vorderen Teil des Abschnitts 8 und der Randschulter 6 ist in der Halteplatte eine Rinne 13 ausgebildet, in welcher eine vordere Querstrebe 26 der Schwinge 20 um ihre Längsachse drehbar aufgenommen und durch ein Paar beabstandete, die Querstrebe 26 übergreifende und in den Seitenwangen der Rinne 13 gehaltene Stifte 25, 27' unverlierbar gehalten ist. Die Längsachse der Querstrebe 26 bildet die vordere Klappachse, um die das Spiegelgehäuse 10 aus der Gebrauchslage heraus nach vorne abklappen kann.

Die Schwinge 20 weist eine hintere Querstrebe 28 auf, die mit der vorderen Querstrebe 26 über zwei im wesentlichen parallele Schenkel 22, 24 verbunden ist. Die hintere Querstrebe 28 ist in einer hinteren Rinne 15 der Halteplatte 5 beherbergt, welche zwischen dem Abschnitt 8 und einem die Fläche 7 enthaltenden ausgekehlten Profil 14 der Halteplatte 5 ausgebildet ist. Die hintere Querstrebe 28 wird, wenn sie in der Rinne 15 liegt, von einer länglichen, aus der Halteplatte 5 ausgeformten Nase 16 derart teilweise übergriffen, daß sie sich zum Abklappen des Spiegelgehäuses 10 nach vorne aus der Rinne 15 befreien kann, bei ihrer Rückkehr in die Rinne 15 jedoch hinter die Nase 16 einrastet.

Der hintere Teil 21 der Schwinge 20 weist eine Gelenkachse 30 auf, welche von zwei beabstandeten, je eine Verlängerung der Schenkel 22, 24 bildende Stützen 27, 29 etwa parallel zur hinteren Querstrebe 28 außerhalb des Profils 14 zum Spiegelgehäuse hin versetzt gehalten ist und die hintere Klappachse des Spiegelgehäuses bildet. Zwei beabstandete Lagerböcke 35, 36 am Spiegelgehäuse umgreifen drehbar die Gelenkachse 30. Zwischen den Lagerböcken 35, 36 sitzt eine Spreizfeder 40 auf der Gelenkachse 30, deren eines Ende 42 gegen eine schwingenfeste Platte 39 und deren anderes Ende 44 gegen eine Wange 17 des Spiegelgehäuses 10 andrückt. Hinter der Gelenkachse 30 erstreckt sich der hintere Randwulst 12 des Spiegelgehäuses 10.

Auf einen Zwischenboden 18 im Spiegelgehäuse 10, der sich in Gebrauchslage quer zum Spiegelfuß 1 erstreckt, ist in der Nähe der Halteplatte 5 ein massiver etwa aus Metall bestehender Block 19 auf der dem Spiegelglas 50 abgewandten Seite des Zwischenbodens 18 befestigt, aus welchem ein in Gebrauchslage auf die Federstäbe 32, 34 zu weisender Arm 46 vorsteht. Das freie Ende des Armes 46 ist aus für die Erfindung unbedeutenden Gründen hier als Gabel 47 ausgeführt, welche am Übergang zum Arm 46 einen Hinterschnitt 48 aufweist. Die Breite der Gabel 47 ist wesentlich größer als die Weite zwischen den entspannten Federstäben 32, 34, erlaubt jedoch ein Eindringen der Gabel 47 durch die elstisch auswärts gebogenen Federstäbe 32, 34 hindurch in das hohle Innere des Abschnitts 8. Dagegen hat der Hinterschnitt 48 eine Breite, die nur unwesentlich größer ist als die Weite zwischen den entspannten Federstäben 32, 34.

Man erkennt bereits, daß die Befestigungsstelle des Blocks 19 auf dem Zwischenboden 18 durch das Zusammenwirken der Gabel 47 mit Hinterschnitt 48 mit den Federstäben 32, 34 einerseits und durch die Anlage des umlaufenden Randwulstes des Spiegelgehäuses 10, von dem der vordere Randwulst 11 und der hintere Randwulst 12 in den Figuren dargestellt sind, an dem Randabsatz 6, der sich auch oben und unten in nicht dargestellter Weise um die Halteplatte 5 erstreckt, und die Fläche 7 bestimmt ist: Wenn der Randwulst des Spiegelgehäuses 10 überall auf dem Spiegelfuß 1 aufliegt, hintergreifen die Federstäbe 32, 34 die Gabel 47 am Hinterschnitt 48.

Nicht im einzelnen dargestellt ist der Halteund Verstellmechanismus für das Spiegeglas 50 des Außenspiegels, der auf dem Zwischenboden 18 vorgesehen ist und in üblicher Weise eine Verstellung des Spiegelglases 50 vom Inneren des Fahrzeugs aus um eine Hochachse und eine Querachse erlaubt. Die dazu erforderlichen Verstellorgane, schematisch als Schlauch 52 dargestellt, können durch eine Öffnung im Zwischenboden 18 sowie durch den zwischen Gabel 47 und den Federstäben oberhalb oder unterhalb verbleibenden freien Raum zwischen den Federstäben 32, 34 hindurch und durch das Innere des Spiegelfußes in das Innere des Fahrzeugs geführt werden.

Die Gebrauchslage des Spiegelgehäuses 10 am Spiegelfuß 1 ist mithin durch ein kraftschlüssiges Hintergreifen der Federstäbe 32, 34 hinter die Gabel 47 bestimmt. Die Halteplatte 5 ist dann insgesamt vom Spiegelgehäuse 10 abgedeckt. Erleidet das Spiegelgehäuse einen hinreichend starken Stoß von vorne, kommt die Gabel 47 vom Hintergriff durch die Federstäbe 32, 34 frei. Das an der Gelenkachse 30 gehaltene Spiegelgehäuse 10 schwenkt um diese, welche Schwenkbewegung durch die von der Spreizfeder 40 entwickelte Kraft unterstützt wird. Das Spiegelgehäuse 10 klappt nach hinten in Richtung auf die Fahrzeugkarosserie und findet die hintere Klappendlage durch Anschlag des hinteren Randwulstes 12 gegen die Platte 39 oder gegen ein anderes spiegelfußfestes Stoppelement. Das Spiegelgehäuse behält diese Klappendlage so lange, bis es von Hand wieder nach vorne in seine Gebrauchslage gegen die Wirkung der Spreizfeder 40 geklappt wird, wobei kurz vor Erreichen d er Gebrauchslage die Gabel 47 zwischen die Federstäbe 32, 34, diese seitlich auslenkend, hindurchtritt. Während des Anklappens nach hinten verbleibt die Schwinge 20 am Spiegelfuß, da die vordere Querstrebe 26 in der Rinne 13 eingefann bleibt.

Erleidet das Spiegelgehäuse 10 einen Schlag von hinten in hinreichender Stärke, kommen nicht nur die Gabel 47 aus dem Hintergriff der Federstäbe 32, 34, sondern auch die hintere Querstrebe 28 aus der hinteren Rinne 15 frei. Das Spiegelgehäuse 10 kann dann um die vordere Klappachse frei nach vorne schwingen, wobei die Schwinge 20 mitgenommen wird.

Die im Folgenden dargestellte und nachfolgend beschriebene zweite Ausführungsform des Außenspiegels ist zum Anbau an die vordere rechte Tür eines Personenwagens vorgesehen, wobei die Fahrtrichtung in den Figuren von rechts nach links anzunehmen ist. Die nachstehenden Angaben "vorne" und "hinten" beziehen sich auf diese Fahrtrichtung.

Zum Anbau des Außenspiegels an die Fahrzeugkarosserie weist er einen im ganzen mit 101 bezeichneten Spiegelfuß auf, der im wesentlichen aus einer massiven eingeprägten Platte besteht. Die Außenkontur des Spiegelfusses 101 ist der Form der Fahrzeugkarosserie angepaßt. Aus der Innenfläche der Platte stehen Befestigungselemente 103, 104 in Form von mit Innengewinde versehenen Stutzen vor, die eine Befestigung des Außenspiegels an der Fahrzeugkarosserie ermöglichen. Nach außen, d.h. von der nicht dargestellten Fahrzeugkarosserie wegweisend schließt der Spiegelfuß 101 mit einer Gegenplatte 105 ab, gegen deren umlaufenden, im wesentlichen ebenen Rand der spiegelfußnahe Randwulst des Spiegelgehäuses 102 in dessen in Fig. 5 dargestellter Gebrauchslage anliegt. In den Figuren ist der vordere spiegelfußseitige Randwulst des Spiegelgehäuses 102 mit 107 und der hintere spiegelfußseitige Randwulst des Spiegelgehäuses mit 109 bezeichnet. Die kraftschlüßige Anlage des Spiegelgehäuses 102 in dessen Gebrauchslage an den Spiegelfuß 101 besorgt eine kräftige Zugfeder 110, deren nicht dargestelltes spiegelgehäuseseitiges Ende im Inneren des Spiegelgehäuses 102 verankert ist. Das spiegelfußnahe Ende 112 der Zugfeder 110 ist in einen Hebel 116 eingehängt, der schwenkbar an einer Schwinge 120 befestigt ist.

Die Schwinge 120 ist ein langgestrecktes Bauteil, das sich in einbautem Zustand quer zu den Klappachsen des Spiegelgehäuses über dessen spiegelfußseitige Öffnung erstreckt. Die Schwinge 120 ist an ihrem vorderen Ende zwischen zwei übereinander aus dem vorderen Randwulst 107 nach innen vorstehenden Ohren 121, 123 mittels eines durch fluchtende Bohrungen in den Ohren 121, 123 und eine Durchgangsbohrung am vorderen Ende 125 der Schwinge 120 hin durchgeführten Gelenkstifts 127 schwenkbar gehalten, wobei der Gelenkstift 127 gleichzeitig die vordere Klappachse des Spiegelgehäuses 102 relativ zu Spiegelfuß 101 definiert.

Die Schwinge 120 besitzt einen breiten Längsschlitz 126, so daß vom vorderen Ende 125 zwei parallele kräftige Stege 128, 129 ausgehen, die an ihrem hinteren Ende zu einer Seite hin verbreitet und dort als Abschluß des Längsschlitzes 126 verbunden sind. Die Schwinge hat damit in Draufsicht von oben die Form eines L mit relativ kurzer Basis. Im Eckbereich des L sind an jedem Steg nach oben bzw. unten vorstehende Aufnahmebuchsen 131, 132 angeformt, welche mit fluchtenden Bohrungen versehen sind. Sie sind dazu bestimmt, durch Aufnahme je eines Gelenkstiftes 133, 134 die hintere Klappachse 135 des Spiegelgehäuses zu definieren.

Die Buchsen 131, 132 der Schwinge 120 passen zwischen zwei Lagerschalen 136, 137, die aus der Gegenplatte 105 nach außen vertikal beabstandet vorstehen und mit fluchtenden Durchgangsbohrungen zur Aufnahme der Gelenkstifte 133, 134 versehen sind. Zwischen beiden Lagerschalen 136, 137 besitzt die Gegenplatte 105 eine etwa über die Länge der Schwinge 120 reichende Einsenkung 117. Jede der beiden Lagerschalen weist eine Kulisse 140, 141 auf, wobei jede Kulisse 140, 141 eine die zugehörige Buchse 131, 132 mit Abstand umgebende Fläche besitzt, deren Gestaltung im einzelnen noch beschrieben wird.

Der Hebel 116 ist zwischen den beiden Stegen 128, 129 an deren langestrecktem Teil, also zwischen den Buchsen 131, 132 und dem vorderen Ende 125, mittels eines die Stege 128, 129 und einen Mittelteil 111 des Hebels 116 durchsetzenden Gelenkstiftes 113 um eine zu den Klappachsen 127 und 135 parallele Achse drehbar gelagert. Der vordere Arm 114 des Hebels 116 weist eine Öffnung 115 auf, in welche das spiegelfußseitige Ende 112 der Zugfeder 110 eingehängt ist. Der hintere Arm 118 des Hebels 116 ist im dargestellten Ausführungsbeispiel der Erfindung kürzer als der vordere Arm 114 und erstreckt sich bezüglich des mittleren Teils 111 dem vorderen Arm 114 gegenüberliegend in den durch den Längsschlitz 126 gebildeten Zwischenraum zwischen den Buchsen 131, 132. In die seitliche Erweiterung 122 der beiden Stege 128, 129 ist ein Schlitz 124 eingeschnitten, der sich im wesentlichen quer zur Längsseite der Stege 128, 129 erstreckt. In dem Schlitz 124 ist ein bolzenförmiges Rastelement 130 derart eingefangen, daß sein mittlerer Abschnitt im Längsschlitz 126 für die Anlage des hinteren Armes 118 freiliegt, und an den gegenüberliegenden Enden über die Stege 128, 129 jedoch nicht über die Buchsen 131, 132 axial vorsteht. Der Bolzen 130 ist im zusammengebauten Zustand des Außenspiegels daher zwischen den Lagerschalen 136, 137 in vertikaler Richtung eingefangen, wobei seine gegenüberliegenden Endabschnitte gegen die Kulissen 140, 141 seitlich anliegen können.

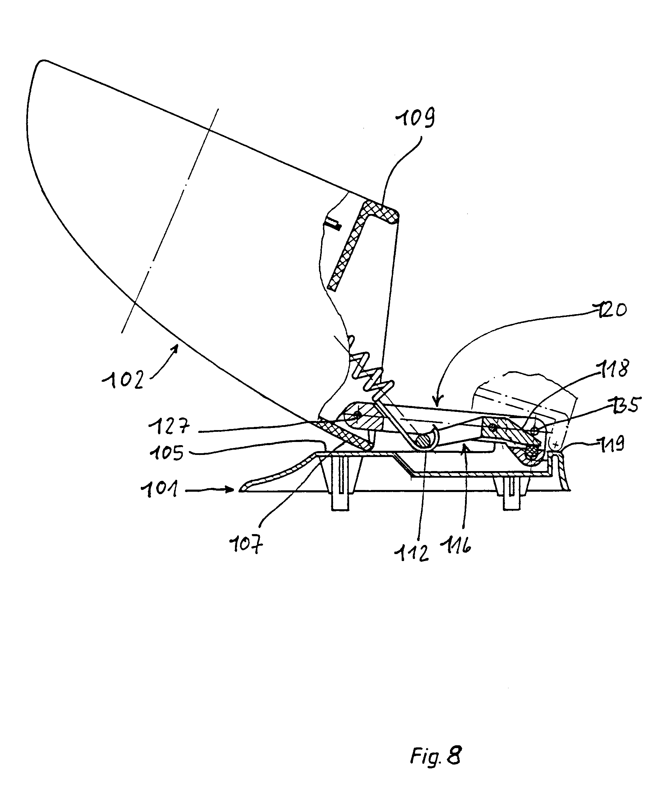

Gemäß Fig. 7, die eine Draufsicht auf die untere Lagerschale 137 darbietet, setzt sich die Kulisse 141 aus mehreren Flächenstücken zusammen. Ausgehend von dem hinteren Ende der Einsenkung 117 der Gegenplatte 105 weist die Kulisse 141 zunächst eine Falle 142 für den Bolzen 130 auf, welche durch einen vergrößerten Abstand des die Falle 142 bildenden Flächenstücks der Kulisse 141 von der hinteren Klappachse 135 realisiert ist. Bei Betrachtung der Fig. 7 in Richtung des Uhrzeigers fortschreitend steigt die Kulisse mit einem rampenförmigen Flächenstück 143 zur hinteren Klappachse 135 an und bildet auf ihrem der hinteren Klappachse 135 nächstgelegenen Kamm eine Schwelle 136. An die Schwelle 136 schließt sich in Uhrzeigerrichtung ein kreisbogenförmig gestaltetes Flächenstück 145 an, dessen Krümmungsmittelpunkt 148 sich in Höhe der hinteren Klappachse 135 jedoch relativ zu letzterer nach vorne versetzt befindet. Dadurch weicht das Flächenstück 145 im Uhrzeigersinn, im zusammengebauten Zustand des Außenspiegels also im Sinne einer Abklappbewegung des Spiegelgehäuses nach hinten, von der hinteren Klappachse 135 zurück, so daß sich dessen Abstand von der hinteren Klappachse 135 zunehmend vergrößert.

An einem von der Schwelle 146 entfernten Endabschnitt des Flächenstücks 145 ist in dieses eine Vertiefung 144 eingedrückt, die dazu bestimmt ist, den Rastbolzen 130 einzufangen.

Die der Kulisse 141 gegenüberliegende Kulisse 140 an der Lagerschale 136 ist spiegelbildlich gleich wie die Kulisse 141 geformt.

Wenn auf das sich in Gebrauchslage (Fig. 5) befindende Spiegelgehäuse 102 ein Schlag nach vorne ausgeübt wird, klappt es um die vordere Klappachse 127 nach vorne und nimmt dabei vorübergehend eine Position gemäß Fig. 8 relativ zum Spiegelfuß 101 ein. Die am vorderen Arm 114 eingehängte Zugfeder 110 übt auf das Spiegelgehäuse eine Rückstellkraft aus, die dafür sorgt, daß nach Beendigung der nach vorne gerichteten Krafteinwirkung auf das Spiegelgehäuse letzteres in die Gebrauchslage zurückkehrt. Die Zugkraft der Zugfeder 110 wird dabei über den Hebel 116 auf den in der Falle 142 eingefangen bleibenden Rastbolzen 130 übertragen, so daß sich die Zugfeder 110 über den Hebel 116 und den Rastbolzen 130 am Spiegelfuß 101 abstützt.

Wird das Spiegelgehäuse entweder durch einen Schlag nach hinten oder durch eine willentlich von Hand ausgeübte Druckkraft nach rückwärts beaufschlagt, die ausreicht, den Rastbolzen 130 gegen die auf ihn auch in Gebrauchslage des Spiegelgehäuses einwirkende Zugkraft der Zugfeder 110 aus der Falle 142 zu befreien und über die Schwelle 136 zu bewegen, schwenkt das Spiegelgehäuse 102 mit der Schwinge 120 um die hintere Klappachse 135 nach hinten. Diese Schwenkbewegung setzt sich selbst dann fort, wenn die nach rückwärts gerichtete Krafteinwirkung auf das Spiegelgehäuse endet. Durch die von der Zugfeder 110 entwickelte Krafteinwirkung auf den Rastbolzen 130 entsteht vermöge der besonderen Gestaltung des Flächenstücks 145 eine Kraftkomponente, die den Rastbolzen 130 auf dem Flächenstück 145 entlang von der Schwelle 146 weg in Richtung auf die Vertiefung 144 treibt, wobei sich der Rastbolzen 130 im Schlitz 124 von der Klappachse 135 weg bewegt. Sobald der Rastbolzen 130 in der Vertiefung 144 eingefangen ist, nimmt das nach rückwärts abgeklappte Spiegelgehäuse seine rückwärtige Klappendlage ein, die in Fig. 6 dargestellt ist. Aus dieser hinteren Klappendlage kann das Spiegelgehäuse 102 durch nach vorne gerichtete Krafteinwirkung wieder in die Gebrauchslage überführt werden, wobei der Rastbolzen 130 aus der Vertiefung 144 über das Flächenstück 145 und die Schwelle 146 in die Falle 142 gleitet.

Hervorzuheben ist, daß der hintere Randwulst 109, der in Gebrauchslage des Spiegelgehäuses 102 an der Gegenfläche 119 an der Gegenplatte 105 ballig anliegt, während der Abklappbewegung des Spiegelgehäuses 102 nach hinten von der Gegenfläche 119 abgehoben wird. Dies wird im wesentlichen dadurch erreicht, daß der hintere Randwulst 109 zu Beginn der rückwärtigen Abklappbewegung gegen die hinteren Begrenzungen 138, 139 der Lagerschalen 136, 137 anliegt und bei weitergehender rückwärtiger Klappbewegung das Spiegelgehäuse 102 daher geringfügig auch um die vordere Klappachse 127 im Gegensinn des Uhrzeigers gemäß Fig. 6 dreht. Maßgeblich hierfür ist, daß die hintere Klappachse 135 in Gebrauchslage innerhalb der spiegelfußseitigen Öffnung des Spiegelgehäuses, die durch die Enden der Randwulste 107, 109 definiert ist, liegt. Konstruktiv ist dies dadurch verwirklicht, daß die Bohrungen für die Gelenkstifte 133, 134 vor der Gegenfläche 119 in die Lagerschalen 136, 137 eingebracht sind.

Durch Wahl des Größenverhältnisses der effektiven Längen der Arme 115, 118 des Hebels 116 kann die von der Zugfeder 110 auf den Bolzen 130 ausgeübte Kraft eingestellt werden.

Die Erfindung ist auf Einzelheiten der beschriebenen Ausführungsbeispiele nicht beschränkt. Sie ist sowohl für solche Außenspiegel anwendbar, deren Spiegelglas außen am Außenspiegel verstellt werden kann, wie auch auf solche Außenspiegel anwendbar, bei denen sich elektrische oder mechanische Betätigungsorgane für die Verstellung des Spiegelglases durch eine spiegelfußseitige Öffnung des Spiegelgehäuses und durch den Spiegelfuß hindurch in das Innere des Fahrzeugs erstrecken.

**Patentansprüche**

1. Außenspiegel für ein Fahrzeug mit einem Spiegelfuß (1; 101) und einem relativ zum Spiegelfuß aus einer Gebrauchslage nach vorne und hinten abklapbaren Spiegelgehäuse (10; 102), welches mittels einer Schwinge (20; 120) am Spiegelfuß gehalten ist, wobei die Schwinge an einem Ende (26; 135) am Spiegelfuß und am anderen Ende (28; 127) am Spiegelgehäuse befestigt ist, dadurch gekennzeichnet, daß wenigstens eine Spreizfeder (40; 110, 116), deren Enden an einem spiegelgehäusefesten Teil (17) und an einem spiegelfußfesten Teil (39) angreifen, das Spiegelgehäuse (10; 102) in eine durch einen Anschlag (39; 144) definierte Klappendlage beaufschlagt.

**2.** Außenspiegel nach Anspruch 1, dadurch gekennzeichnet, daß in der Gebrauchslage wenigstens ein Rastelement (47; 130) in eine Raste (32, 34; 142) eingefangen ist.

**3.** Außenspiegel nach Anspruch 1 oder 2, dadurch gekennzeichnet, daß die Spreizfeder (40) auf der als Gelenkachse (30) der Schwinge (20) ausgebildeten Klappachse sitzt.

**4.** Außenspiegel nach Anspruch 2, dadurch gekennzeichnet, daß die Gelenkachse am Spiegelgehäuse gelagert ist.

**5.** Außenspiegel nach einem der vorstehenden Ansprüche, dadurch gekennzeichnet, daß die Klappachse (30) die hintere Klappachse des Spiegelgehäuses ist.

**6.** Außenspiegel nach einem der vorstehenden Ansprüche, dadurch gekennzeichnet, daß die Raste zwei parallele, beabstandete Federstäbe (32, 34) aufweist.

**7.** Außenspiegel nach einem der vorstehenden Ansprüche, dadurch gekennzeichnet, daß die Raste bzw. die Federstäbe am Spiegelfuß (1) befestigt sind.

**8.** Außenspiegel nach einem der vorstehenden Ansprüche, dadurch gekennzeichnet, daß das Rastelement einen Arm (46) mit verdicktem (47) und hinterschnittenem (48) Ende aufweist.

**9.** Außenspiegel nach einem der vorstehenden Ansprüche, dadurch gekennzeichnet, daß eine am Spiegelgehäuse (102) verankerte Zugfeder (110) ein an der Schwinge (120) beweglich geführtes Rastelement (130) gegen eine spiegelfußfeste Kulisse (140, 141) beaufschlagt, an der eine Falle (142) sowie eine die hintere Klappendlage des Spiegelgehäuses (102) definierende Vertiefung (144) und zwischen der Falle (142) und der Vertiefung eine zur Vertiefung leicht abfallende Schwelle (146) ausgebildet sind.

**10.** Außenspiegel nach Anspruch 9, dadurch gekennzeichnet, daß das spiegelfußseitige Ende (112) der Zugfeder am vorderen Arm (114) eines zweiseitigen, an der Schwinge (120) angelenkten Hebels (116) eingehängt ist, dessen anderer Arm (118) gegen das Rastelement (130) anliegt.

**11.** Außenspiegel nach Anspruch 9 oder 10, dadurch gekennzeichnet, daß das Rastelement (130) in einer Erweiterung (122) der Schwinge (120) beweglich geführt ist, die bezüglich der hinteren Klappachse (135) des Spiegelgehäuses (102) auf den Spiegelfuß (101) zuweist.

**12.** Außenspiegel nach Anspruch 11, dadurch gekennzeichnet, daß die Erweiterung (122) einen Schlitz (124) aufweist, in welchem das bolzenartige Rastelement (130) eingefangen ist.

**13.** Außenspiegel nach einem der Ansprüche 9, 10, 11 oder 12, dadurch gekennzeichnet, daß die Kulisse (140, 141) zwischen der Falle (142) und der Vertiefung (144) kreisbogenförmig mit einem Krümmungsmittelpunkt (148) gestaltet ist, der relativ zur hinteren Klappachse (135) des Spiegelgehäuses (102) nach vorne versetzt ist.

**14.** Außenspiegel nach einem der Ansprüche 9, 10, 11, 12 oder 13, dadurch gekennzeichnet, daß die Schwinge (120) einen Längsschlitz (126) aufweist, durch welchen das spiegelfußseitige Ende (112) der Zugfeder (110) hindurchgreift.

**15.** Außenspiegel nach einem der Ansprüche 9 bis 14, dadurch gekennzeichnet, daß die hintere Klappachse (135) des Spiegelgehäuses (102) durch eine Anlenkung der Schwinge (120) am Spiegelfuß (101) und die vordere Klappachse (127) des Spiegelgehäues (102) durch eine Anlenkung der Schwinge (120) am Spiegelgehäuse (102) definiert sind.

**16.** Außenspiegel nach einem der Ansprüche 9 bis 15, dadurch gekennzeichnet, daß der Hebel (116) zwischen der vorderen (127) und der hinteren (135) Klappachse des Spiegelgehäuses (102) an der Schwinge (120) angelenkt ist.

**17.** Außenspiegel nach einem der Ansprüche 9 bis 16, dadurch gekennzeichnet, daß das die hintere Klappachse (135) definierende Gelenk der Schwinge (120) relativ zu einer spiegelfußseitigen Anlagefläche (119) für den hinteren spiegelfußnahen Spiegelgehäuserand (109) nach außen versetzt ist, und daß ein Anschlag (138, 139) für den hinteren Spiegelgehäuserand (109) am Spiegelfuß (101) vorgesehen ist.

**Claims**

**1.** An exterior mirror for a vehicle with a mirror base (1; 101) and a mirror housing (10; 102), which can be hinged backwards and forwards, relative to the mirror base, from a position of use and which is held on the mirror base by means of a rocker arm (20; 120), the rocker arm being attached at one end (26; 135) to the mirror base and at the other end (28; 127) to the mirror housing, characterised in that at least one expanding spring (40; 110, 116), whose ends engage against a part (17) fixed to the mirror housing and a part (39) fixed to the mirror base, acts upon the mirror housing (10; 102) so that it moves into a final hinge position defined by a limit stop (39; 144),

2. An exterior mirror according to Claim 1, characterised in that, in the position of use, at least one stopping element (47; 130) is caught in a stop notch (32, 34; 142).

3. An exterior mirror according to Claim 1 or 2, characterised in that the expanding spring (40) sits on the hinge axle which is formed as an articulation axle (30) of the rocker arm (20).

4. An exterior mirror according to Claim 2, characterised in that the articulation axle is mounted on the mirror housing.

5. An exterior mirror according to any one of the preceding Claims, characterised in that the hinge axle (30) is the rear hinge axle of the mirror housing.

6. An exterior mirror according to any one of the preceding Claims, characterised in that the stop notch has two parallel spring bars (32, 34) at a distance from one another.

7. An exterior mirror according to any one of the preceding Claims, characterised in that the stop notch and/or the spring bars are attached to the mirror base (1).

8. An exterior mirror according to any one of the preceding Claims, characterised in that the stopping element has an arm (46) with a thickened end (47) and an undercut end (48).

9. An exterior mirror according to any one of the preceding Claims, characterised in that a tension spring (110), anchored on the mirror housing (102), acts upon a stopping element (130), guided movably on the rocker arm (120), so that it moves towards a crank (140, 141) which is fixed to the mirror base and which comprises a catch (142), a recess (144) defining the rear final hinge position of the mirror housing (102), and - between the catch (142) and the recess - a threshold (146) sloping gently towards the recess.

10. An exterior mirror according to Claim 9, characterised in that the end (112) (on the side of the mirror base) of the tension spring is hung on the front arm (114) of a two-sided lever (116), which is articulated on the rocker arm (120) and whose other arm (118) rests against the stopping element (130).

11. An exterior mirror according to Claim 9 or 10, characterised in that the stopping element (130) is guided movably in an enlargement (122) of the rocker arm (120), which points towards the mirror base (101) relative to the rear hinge axle (135) of the mirror housing (102).

12. An exterior mirror according to Claim 11, characterised in that the enlargement (122) has a slit (124) in which the bolt-like stopping element (130) is caught.

13. An exterior mirror according to any one of Claims 9, 10, 11 or 12, characterised in that the crank (140, 141) is formed between the catch (142) and the recess (144) in the shape of a circular arc, with a centre of curvature (148) which is offset forwards relative to the rear hinge axle (135) of the mirror housing (102).

14. An exterior mirror according to any one of Claims 9, 10, 11, 12 or 13, characterised in that the rocker arm (120) has a longitudinal slit (126) through which the end (112) (on the side of the mirror base) of the tension spring (110) extends.

15. An exterior mirror according to any one of Claims 9 to 14, characterised in that the rear hinge axle (135) of the mirror housing (102) is defined by an articulation of the rocker arm (120) on the mirror base (101) and the front hinge axle (127) of the mirror housing (102) is defined by an articulation of the rocker arm (120) on the mirror housing (102).

16. An exterior mirror according to any one of Claims 9 to 15, characterised in that the lever (116) is articulated on the rocker arm (120) between the front (127) and the rear (135) hinge axle of the mirror housing (102).

17. An exterior mirror according to any one of Claims 9 to 16, characterised in that the joint of the rocker arm (120), which joint defines the rear hinge axle (135), is offset outwards relative to a contact surface (119) (on the side of the mirror base) for the rear mirror housing edge (109) near the mirror base, and in that a limit stop (138, 139) is provided on the mirror base (101) for the rear mirror housing edge (109).

## Revendications

1. Rétroviseur extérieur pour un véhicule, muni d'un pied de rétroviseur (1 ; 101) et d'un boîtier de rétroviseur (10 ; 102) qui peut être rabattu, hors d'une position d'utilisation, vers l'avant et vers l'arrière par rapport au pied de rétroviseur et qui est maintenu au pied de rétroviseur au moyen d'un bras oscillant (20 ; 120), le bras oscillant étant articulé, à l'une de ses extrémités (26 ; 135), sur le pied de rétroviseur et, à son autre extrémité (28 ; 127), sur le boîtier de rétroviseur, caractérisé en ce que au moins un ressort d'écartement (40 ; 110, 116), dont les extrémités coopèrent avec une partie (17) solidaire du boîtier de rétroviseur et avec une partie (39) solidaire du pied de rétroviseur, sollicite le boîtier de rétroviseur (10 ; 102) vers une position extrême rabattue définie par une butée (39 ; 144).

2. Rétroviseur extérieur conforme à la revendication 1, caractérisé en ce que, en position d'utilisation, au moins un élément d'encliquetage (47 ; 130) est engagé dans un cran (32, 34 ; 142).

3. Rétroviseur extérieur conforme à la revendication 1 ou 2, caractérisé en ce que le ressort d'écartement (40) est monté sur l'axe de pivotement conçu sous la forme d'un axe d'articulation (30) du bras oscillant (20).

4. Rétroviseur extérieur conforme à la revendication 2, caractérisé en ce que l'axe d'articulation est monté sur le boîtier de rétroviseur.

5. Rétroviseur extérieur conforme à l'une quelconque des revendications précédentes, caractérisé en ce que l'axe de pivotement (30) est l'axe arrière de pivotement du boîtier de rétroviseur.

6. Rétroviseur extérieur conforme à l'une quelconque des revendications précédentes, caractérisé en ce que le cran comporte deux tiges élastiques parallèles espacées (32, 34).

7. Rétroviseur extérieur conforme à l'une quelconque des revendications précédentes, caractérisé en ce que le cran ou, respectivement, les tiges élastiques sont fixés sur le pied de rétroviseur (1).

8. Rétroviseur extérieur conforme à l'une quelconque des revendications précédentes, caractérisé en ce que l'élément d'encliquetage comporte un bras (46) dont l'extrémité est épaissie (47) et en décrochement (48).

9. Rétroviseur extérieur conforme à l'une quelconque des revendications précédentes, caractérisé en ce qu'un ressort de traction (110) fixé sur le boîtier de rétroviseur (102) sollicite un élément d'encliquetage (130), guidé de manière mobile sur le bras oscillant (120), contre une coulisse (140, 141) qui est solidaire du pied de rétroviseur et sur laquelle sont formés une encoche (142) ainsi qu'un évidement (144) qui définit la position extrême arrière rabattue du boîtier de rétroviseur (102) et, entre l'encoche (142) et l'évidement, un seuil (143) légèrement incliné vers l'évidement.

10. Rétroviseur extérieur conforme à la revendication 9, caractérisé en ce que l'extrémité (112) du ressort de traction située côté pied de rétroviseur est accrochée sur le bras avant (114) d'un levier double (116) qui est articulé sur le bras oscillant (120) et dont l'autre bras (118) est appliqué contre l'élément d'encliquetage (130).

11. Rétroviseur extérieur conforme à la revendication 9 ou 10, caractérisé en ce que l'élément d'encliquetage (130) est guidé de manière mobile dans un élargissement (122) du bras oscillant (120), qui, par rapport à l'axe arrière de pivotement (135) du boîtier de rétroviseur (102), est tourné vers le pied de rétroviseur (101).

12. Rétroviseur extérieur conforme à la revendication 11, caractérisé en ce que l'élargissement (122) comporte une fente (124) dans laquelle est logé l'élément d'encliquetage en forme de goujon (130).

13. Rétroviseur extérieur conforme à l'une quelconque des revendications 9, 10, 11 ou 12, caractérisé en ce que la coulisse (140, 141) présente, entre l'encoche (142) et l'évidement (144), la forme d'un arc de cercle dont le centre de courbure (148) est déporté vers l'avant par rapport à l'axe arrière de pivotement (135) du boîtier de rétroviseur (102).

14. Rétroviseur extérieur conforme à l'une quelconque des revendications 9, 10, 11, 12 ou 13, caractérisé en ce que le bras oscillant (120) comporte une fente longitudinale (126) à travers laquelle s'engage l'extrémité (112) du ressort de traction (110) située côté pied de rétroviseur.

15. Rétroviseur extérieur conforme à l'une quelconque des revendications 9 à 14, caractérisé en ce que l'axe arrière de pivotement (135) du boîtier de rétroviseur (102) est défini par un point d'articulation du bras oscillant (120) sur le pied de rétroviseur (101), et l'axe avant de pivotement (127) du boîtier de rétroviseur (102) est défini par un point d'articulation du bras oscillant (120) sur le boîtier de rétroviseur (102).

16. Rétroviseur extérieur conforme à l'une quelconque des revendications 9 à 15, caractérisé en ce que le levier (116) est articulé sur le bras oscillant (120) entre l'axe avant de pivotement (127) et l'axe arrière de pivotement (135) du boîtier de rétroviseur (102).

17. Rétroviseur extérieur conforme à l'une quelconque des revendications 9 à 16, caractérisé en ce que l'articulation du bras oscillant (120) qui définit l'axe arrière de pivotement (135) est déportée vers l'extérieur par rapport à une surface d'appui (119) située côté pied de rétroviseur et destinée au bord extérieur de boîtier de rétroviseur (109) proche du pied de rétroviseur, et en ce qu'une butée (138, 139) est prévue sur le pied de rétroviseur (101) pour le bord arrière de boîtier de rétroviseur (109).

Fig. 1

Fig. 2

Fig. 3

Fig. 4

Fig.5

115 112 120 125 127 123 126 110 113 102

101

105 117 124 122
109 118 111

Fig. 6

137 148 135

144

141

117

145 Fig. 7
136
143
142 101

*Fig. 8*

Fig. 9